# EUROPEAN PATENT APPLICATION

(11) **EP 1 006 688 A2**
(43) Date of publication of application: **07.06.2000**
(21) Application number: 99309686.6
(22) Date of filing: 02.12.1999
(51) Int. Cl.: H04J 14/02

(54) **Optical multiplexer/demultiplexer circuit for wavelenght division multiplex transmission**

(30) Priority: 02.12.1998 JP 34226798
(71) Applicant: NEC CORPORATION, Tokyo (JP)
(72) Inventor: Toyohara, Atsushi, Minato-ku, Tokyo (JP)
(74) Representative: Moir, Michael Christopher

(57) **Abstract**

An optical multiplexer/demultiplexer circuit includes a WDM coupler, a plurality of variable optical attenuators, a plurality of Faraday rotors, and a plurality of total reflection plates. The WDM coupler demultiplexes signal light beams propagating through an optical transmission line and having different wavelengths in units of wavelengths, and multiplexes gain-adjusted demultiplexed light beams and guides a multiplexed light beam onto the optical transmission line. The variable optical attenuators perform gain adjustment of the signal light beams in units of wavelengths output from the WDM coupler separately to set the signal light beams to have substantially the same signal level. The Faraday rotors rotate polarization planes of the signal light beams output from the variable optical attenuators. The total reflection plates reflect the signal light beams output 'from the Faraday rotors and output the reflected signal light beams to the WDM coupler as gain-adjusted demultiplexed light beams through the Faraday rotors and the variable optical attenuators.

## Description

### Background of the Invention

The present invention relates to an optical multiplexer/demultiplexer circuit for wavelength division multiplex transmission and, more particularly, to an optical multiplexer/demultiplexer circuit in wavelength division multiplex transmission in which signal light beams having different wavelengths are communicated while propagating on one optical transmission line.

In wavelength division multiplex transmission, the signals to be transmitted preferably have the same wavelength level. It is, however, difficult to set the signals to have the same wavelength level due to the wavelength dependency of transmission loss on the transmission line, the wavelength dependencies of optical circuits such as an optical amplifier and a dispersion compensator arranged along the transmission line, and the like.

In order to solve these problems, in Japanese-Patent Laid-Open No. 10-173597, the present applicant/assignee proposes a technique for setting the wavelength levels separately. Also, Saeki et al. have made a report based on this technique in "Optical fiber amplifier modules with Dynamic Equalizing Function for WDM transmission", PROCEEDINGS OF THE 1997 ELECTRONICS SOCIETY CONFERENCE OF IEICE, SC-3-5, September 1197.

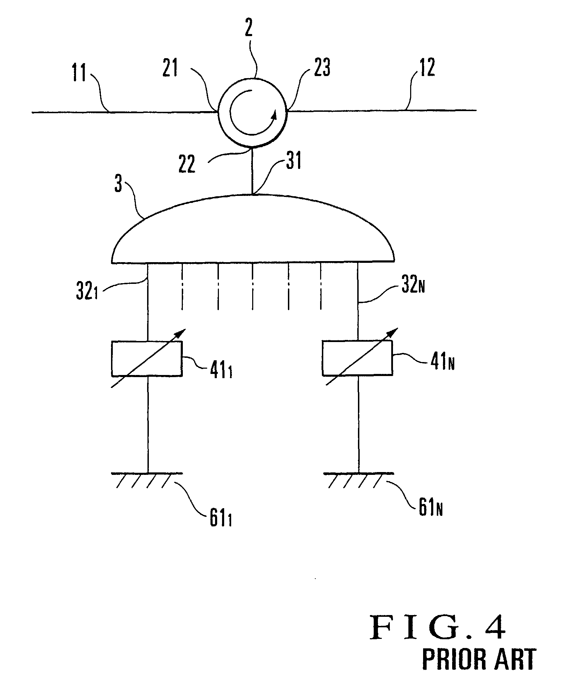

Fig. 4 explains this technique. Referring to Fig. 4, a signal light beam propagating through a wavelength division multiplex transmission line 11 is input to a port 21 of an optical circulator 2 and output from a port 22 of the optical circulator 2. An output light beam from the port 22 is supplied to a multiplex port 31 of a WDM (Wavelength Division Multiplex) coupler 3. Signal light beams having respective wavelengths separated from each other are guided from separation ports 32₁ to 32_{N} (N is an integer of 2 or more) of the WDM coupler 3. The signal light beams are adjusted to desired levels in units of wavelengths by corresponding variable optical attenuators 41₁ to 41_{N} and come incident on corresponding total reflection plates 61₁ to 61_{N}.

The light beams reflected by the total reflection plates 61₁ to 61_{N} are guided to the separation ports 32₁ to 32_{N} of the WDM coupler 3 through the corresponding variable optical attenuators 41₁ to 41_{N} and are multiplexed. The multiplexed light beam output from the multiplex port 31 is input to the port 22 of the optical circulator 2, and is output to a transmission line 12 from a port 23 as a wavelength division multiplexed light beam and is propagated.

In this arrangement, the levels of the signal light beams of all the wavelengths can be set the same by adjusting the levels of the signal light beams of the respective wavelengths to desired values by the variable optical attenuators 41₁ to 41_{N}.

In this arrangement, the polarization dependencies of the optical components, such that the WDM coupler 3 and variable optical attenuators 41₁ and 41_{N}, produce level fluctuations in units of the signal wavelengths.

### Summary of the Invention

It is an object of the preferred embodiment of the present invention to provide an optical multiplexer/ demultiplexer circuit in which the polarization dependencies of optical components such as a WDM coupler and variable optical attenuators are minimized so that level fluctuations in units of signal wavelengths can be suppressed.

According to the present invention, there is provided an optical multiplexer/demultiplexer circuit comprising optical coupler means for demultiplexing signal light beams propagating through an optical transmission line and having different wavelengths in units of wavelengths, and for multiplexing gain-adjusted demultiplexed light beams and for guiding a multiplexed light beam onto the optical transmission line, a plurality of gain-adjusting means for performing gain adjustment of the signal light beams in units of wavelengths output from the optical coupler means separately to set the signal light beams to have substantially the same signal level, a plurality of polarization-plane rotating means for rotating polarization planes of the signal light beams output from the gain-adjusting means, and a plurality of light-reflecting means for reflecting the signal light beams output from the polarization plane rotating means and outputting the reflected signal light beams to the optical coupler means as gain-adjusted demultiplexed light beams through the polarization-plane rotating rotating means and the gain-adjusting means.

The invention is also a method for reducing polarization effects on signal light beams whose component wavelengths are demultiplexed, passed through a gain-adjusting means to create substantially equal signal levels of the wavelengths, reflected by a reflection means, passed again through the gain-adjusting means on a return passage, and then multiplexed, the method comprising passing the component wavelengths through a polarization-plane rotating means during both their passage and return passage between the gain-adjusting means and the reflection means.

### Brief Description of the Drawings

Preferred features of the present invention will now be described, by way of example only, with reference to the accompanying drawings, in which:-
Fig. 1 is a view showing the schematic arrangement of an optical multiplexer/demultiplexer circuit according to the first embodiment of the present invention;
Fig. 2 is a view showing the schematic arrangement of an optical multiplexer/demultiplexer circuit according to the second embodiment of the present invention;
Fig. 3 is a view showing the schematic arrangement of an optical multiplexer/demultiplexer circuit according to the third embodiment of the present invention; and,
Fig. 4 is a view showing the schematic arrangement of a conventional optical multiplexer/ demultiplexer circuit.

### Description of the Preferred Embodiments

The present invention will be described in detail with reference to the accompanying drawings.

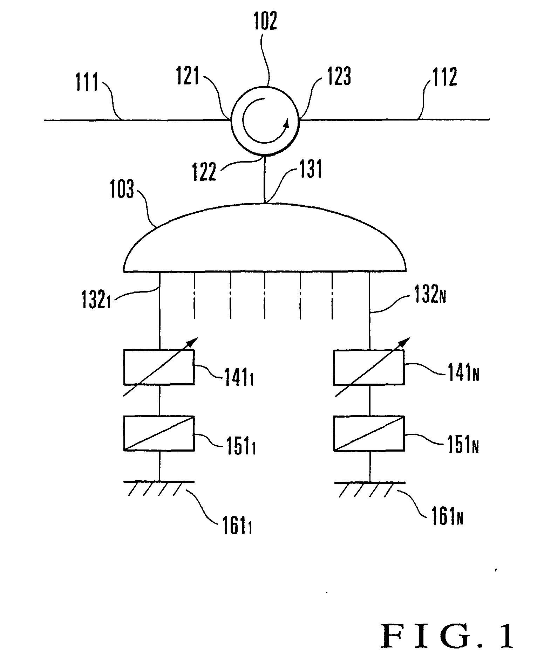

Fig. 1 shows the schematic arrangement of an optical multiplexer/demultiplexer circuit according to the first embodiment of the present invention. Referring to Fig. 1, a wavelength multiplexed signal light beam is input to (comes incident on) a port 121 of an optical circulator 102 from an optical transmission line 111 and is output (emerges) from a port 122 of the optical circulator 102. The port 122 is connected to a multiplex port 131 of a WDM coupler 103.

The WDM coupler 103 separates the wavelength multiplexed signal input to its multiplex port 131 in units of wavelengths, and outputs the resultant signals at its demultiplex ports 132₁ to 132_{N}. The respective optical outputs from the demultiplex ports 132₁ to 132_{N} are reflected by total reflection plates 161₁ to 161_{N} through corresponding variable optical attenuators 141₁ to 141_{N} and Faraday rotors 151₁ to 151_{N}.

The signal light beams reflected by the total reflection plates 161₁ to 161_{N} are input to the port 122 of the optical circulator 102 through the Faraday rotors 151₁ to 151_{N} and variable optical attenuators 141₁ to 141_{N}. The signal light beams input to the optical circulator 102 are output from a port 123 to a transmission line 112.

In this arrangement, the Faraday rotors 151₁ to 151_{N} have the function of rotating the polarization plane through 45° by applying an appropriate external magnetic field. Hence, the light beams that are input to the Faraday rotors 151₁ to 151_{N} on the forward path are output after their polarization planes are rotated through 45°. The polarization planes of the light beams reflected by the total reflection plates 161₁ to 161_{N} are rotated through 45° again by the Faraday rotors 151₁ to 151_{N} on the return path, so they are rotated through 90° with respect to the incident polarization planes.

Since the light beams having polarization planes perpendicular to each other are transmitted through the variable optical attenuators 141₁ to 141_{N} and WDM coupler 103, the polarization dependencies of these optical components cancel each other to be averaged. As a result, level fluctuations caused by the polarization dependencies of these optical components are suppressed.

A practical example of the above optical multiplexer/demultiplexer circuit will be described. The WDM coupler 103 uses waveguides called AWGs (Arrayed Waveguide Gratings) formed on a quartz substrate by photolithography, and an optical device comprised of an optical fiber terminal connected and fixed to the end faces of the waveguides. A WDM coupler constituted by a combination of fiber gratings, other than the AWGs, and an optical circulator, a WDM coupler using a diffraction grating, and the like are also available. The AWGs are advantageous because their fluctuations in insertion loss in units of wavelengths are small.

To form the variable optical attenuators 141₁ to 141_{N}, MZ (Mach-Zhender) waveguides are formed on a quartz substrate to adjust the attenuation amount by the thermo-optic effect. Alternatively, Faraday rotors may be used to adjust the attenuation amount by the magneto-optic effect, or crystals of lead molybdate or the like may be used to adjust the attenuation amount by the acousto-optic effect. Also, metal films made of chromium or the like may be deposited on a glass substrate by changing their thicknesses stepwise to adjust the attenuation amount by sliding the glass substrate with a stepping motor or the like.

Of the above schemes, any particular one can be employed. With the waveguide-type scheme using the thermo-optic effect, a plurality of attenuators can be formed on one substrate, which is advantageous in terms of downsizing.

Regarding the total reflection plates 161₁ to 161_{N}, they are formed of metal films. Alternatively, dielectric multilayer films may be formed to obtain high reflection characteristics, or a fiber grating may be formed to obtain high reflection characteristics. Total reflection plates made of metal films are economically advantageous.

In this arrangement, a case will be described wherein 1.55-µm band multiplexed optical signals (wavelength = 1,538 nm, 1,546 nm, 1,554 nm, and 1,562 nm) come incident on the port 122 of the optical circulator 102 from the optical transmission line 111 and are input to the multiplex port 131 of the WDM coupler 103 from the port 122.

As the WDM coupler 103, waveguides called an AWG formed on a quartz substrate by photolithography are used. The separation wavelength spacing of the waveguides is determined by waveguide pattern design. In this embodiment, an AWG which separates wavelengths of 1,538 nm to 1,562 nm with a spacing corresponding to 100 GHz is employed.

An optical signal multiplexed by the AWG is separated in units of wavelengths, and wavelength signals of 1,538 nm, 1,546 nm, 1,554 nm, and 1,562 nm are output from the demultiplex ports 132₁ to 132₄. Of the separated four wavelengths, for example, a 1,538-nm signal comes incident on the Faraday rotors 151₁ to 151_{N} through the variable optical attenuators 141₁ to 141_{N} so that their polarization planes are respectively inclined by 45°.

The optical signals output from the Faraday rotors 151₁ to 151_{N} are reflected by the total reflection plates 161₁ to 161_{N} made of metal films. The reflected signal light beams are transmitted along a path (return path) reverse to the path (forward path) described above to come incident on the port 122 of the optical circulator 102, and are output from the port 123 of the optical circulator 102 to the optical transmission line 112. On the return path, the polarization planes of the optical signals are rotated through 45° again by the Faraday rotors 151₁ to 151_{N}.

According to experiments, in a system in which Faraday rotors are not arranged, the level fluctuations of each wavelength from the optical transmission line 112 were 0.3 dB to 0.7 dB. As compared to this, when the arrangement of the present invention was adopted, the level fluctuations were greatly improved to a range of 0.1 dB to 0.3 dB.

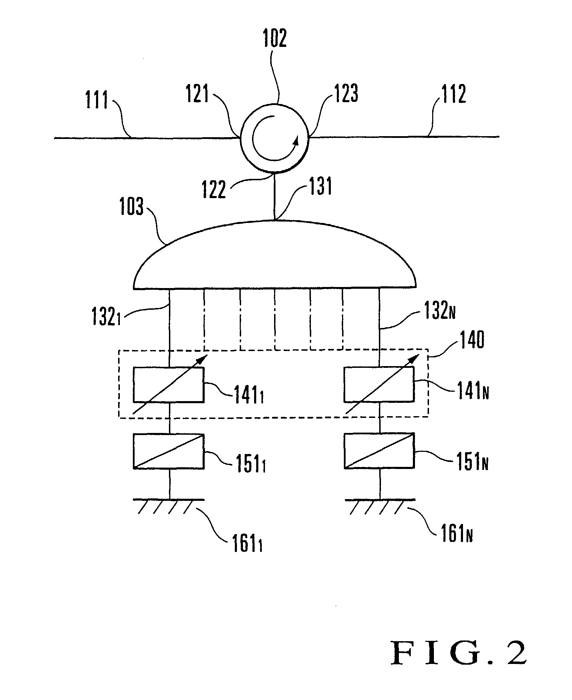

Fig. 2 shows the schematic arrangement of an optical multiplexer/demultiplexer circuit according to the second embodiment of the present invention. In Fig. 2, portions identical to those in Fig. 1 are denoted by the same reference numerals as in Fig. 1. In the second embodiment, as variable optical attenuators 141₁ to 141_{N}, quartz waveguide optical attenuators using the thermo-optic effect are employed. The variable optical attenuator portion can be formed to constitute an integrated circuit 140.

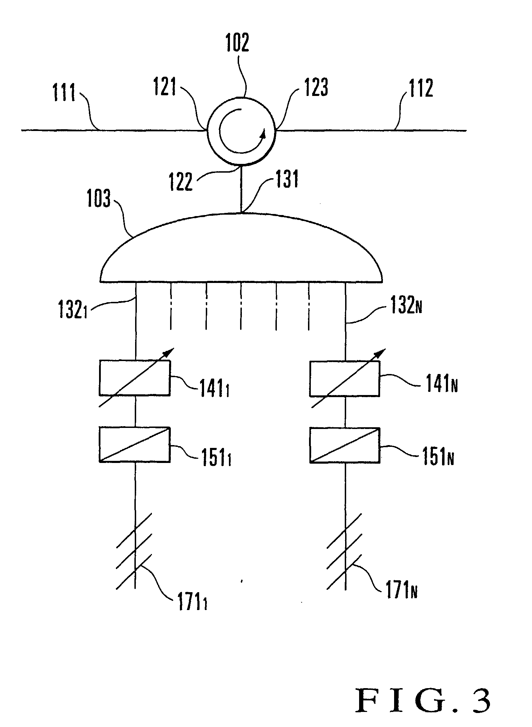

Fig. 3 shows the schematic arrangement of an optical multiplexer/demultiplexer circuit according to the third embodiment of the present invention. In Fig. 3, portions identical to those in Fig. 1 are denoted by the same reference numerals as in Fig. 1. In the third embodiment, fiber gratings 171₁ to 171_{N} are employed in place of the total reflection plates 161₁ to 161_{N} of Fig. 1. The fiber gratings 171₁ to 171_{N} reflect only light beams having wavelengths near a specific wavelength. When a light beam having a wavelength other than the specific wavelength leaks to a separation port 132_{N} of a WDM coupler 103, the fiber gratings 171₁ to 171_{N} serve as filters that prevent this leakage light from returning to the optical transmission line 112.

As has been described above, according to the present invention, when Faraday rotors are inserted in the forward/return paths to/from total reflecting means, level fluctuations caused by the polarization dependencies of the respective components such as a WDM coupler and variable optical attenuators can be moderated. As a result, fluctuations in signals on the optical transmission line can be suppressed.

While the present invention has been described in its preferred embodiments, it is to be understood that the words which have been used are words of description rather than limitation, and that changes may be made to the invention without departing from its scope as defined by the appended claims.

Each feature disclosed in this specification (which term includes the claims) and/or shown in the drawings may be incorporated in the invention independently of other disclosed and/or illustrated features.

Reference numerals appearing in the claims are by way of illustration only and shall be disregarded when interpreting the scope of the claims.

The text of the abstract filed herewith is repeated here as part of the specification.

An optical multiplexer/demultiplexer circuit includes a WDM coupler, a plurality of variable optical attenuators, a plurality of Faraday rotors, and a plurality of total reflection plates. The WDM couples demultiplexes signal light beams propagating through an optical transmission line and having different wavelengths in units of wavelengths, and multiplexes gain-adjusted demultiplexed light beams and guides a multiplexed light beam onto the optical transmission line. The variable optical attenuators perform gain adjust-ment of the signal light beams in units of wavelengths output from the WDM coupler separately to set the signal light beams to have substantially the same signal level. The Faraday rotors rotate polarization planes of the signal light beams output from the variable optical attenuators. The total reflection plates reflect the signal light beams output from the Faraday rotors and output the reflected signal light beams to the WDM coupler as gain-adjusted demultiplexed light beams through the Faraday rotors and the variable optical attentuators.

## Claims

1. An optical multiplexer/demultiplexer circuit characterized by comprising:
optical coupler means (103) for demultiplexing signal light beams propagating through an optical transmission line (111, 112) and having different wavelengths in units of wavelengths, and multiplexing gain-adjusted demultiplexed light beams and guiding a multiplexed light beam onto said optical transmission line;
a plurality of gain adjusting means (141₁ - 141_{N}) for performing gain adjustment of the signal light beams in units of wavelengths output from said optical coupler means separately to set the signal light beams to have substantially the same signal level;
a plurality of polarization plane rotating means (151₁ - 151_{N}) for rotating polarization planes of the signal light beams output from said gain adjusting means; and
a plurality of light reflecting means (161₁ - 161_{N}) for reflecting the signal light beams output from said polarization plane rotating means and outputting the reflected signal light beams to said optical coupler means as gain-adjusted demultiplexed light beams through said polarization plane rotating means and said gain adjusting means.

2. A circuit according to claim 1, wherein said polarization plane rotating means are Faraday rotors that rotate the polarization planes of the signal light beams by applying an external magnetic field.

3. A circuit according to claim 1, wherein said gain adjusting means are variable optical attenuators that variably adjust attenuation amounts of the signal light beams.

4. A circuit according to claim 3, wherein said variable optical attenuators are quartz waveguide optical attenuators.

5. A circuit according to claim 4, wherein said quartz waveguide optical attenuators are comprised of integrated circuits.

6. A circuit according to claim 1, wherein said reflecting means are fiber gratings that reflect only a signal light beam having a corresponding wavelength.

7. A circuit according to claim 1, further comprising an optical circulator (102) arranged in said optical transmission line to receive optical signals propagating through said optical transmission line and output the received optical signals to said optical coupler means, and to receive a multiplexed optical signal from said optical coupler and output the received multiplexed optical signal to said optical transmission line.

8. A circuit according to claim 1, wherein
the polarization planes of the signal light beams are rotated through 45° by said polarization plane rotating means, and
said optical coupler means and said gain adjusting means have polarization dependencies that are averaged by signal light beams on a forward path and a return path perpendicular to each other, the polarization dependencies producing level fluctuations.

9. A circuit according to claim 1, wherein said optical coupler is a WDM (Wavelength Division Multiplex) coupler having a plurality of separation ports (132₁ - 132_{N}) for outputting the wavelength-separated signal light beams, and a multiplex port (131) for outputting a multiplexed light beam of the gain-adjusted signal light beams input to said separation ports to said optical transmission line.

10. A method for reducing polarization effects on signal light beams whose component wavelengths are demultiplexed, passed through a gain-adjusting means to create substantially equal signal levels of the wavelengths, reflected by a reflection means, passed again through the gain-adjusting means on a return passage, and then multiplexed, the method comprising passing the component wavelengths through a polarization-plane rotating means during both their passage and return passage between the gain-adjusting means and the reflection means.
